# FASCICULE DE BREVET EUROPEEN

(11) **EP 3 993 957 B1**
(45) Date de publication et mention de la délivrance du brevet: **30.08.2023**
(21) Numéro de dépôt: 20735594.2
(22) Date de dépôt: 02.07.2020
(51) Int. Cl.: B25J 9/00

(54) **DISPOSITIF COMPACT DESTINÉ À ÊTRE POSITIONNÉ À PROXIMITÉ D'UNE ARTICULATION ET SYSTÈME GÉNÉRAL COMPORTANT UN TEL DISPOSITIF COMPACT**
KOMPAKTE VORRICHTUNG ZUR POSITIONIERUNG IN DER NÄHE EINES GELENKS UND ALLGEMEINES SYSTEM MIT EINER SOLCHEN KOMPAKTEN VORRICHTUNG
COMPACT DEVICE DESIGNED TO BE POSITIONED CLOSE TO A JOINT AND GENERAL SYSTEM COMPRISING SUCH A COMPACT DEVICE

(30) Priorité: 02.07.2019 FR 1907331
(43) Date de publication de la demande: 11.05.2022
(73) Titulaire: Safran Electronics & Defense, 75015 Paris (FR)
(72) Inventeur: GRENIER, Jordane, 75015 Paris (FR); LAROSE, Pascal, Sherbrooke, QC J1H 1M4 (CA)
(74) Mandataire: Decorchemont, Audrey Véronique Christèle
(86) Numéro de dépôt international: PCT/EP2020/068717
(87) Numéro de publication internationale: WO 2021/001497

(56) Documents cités:
- CN-A- 107 802 455
- CN-A- 108 189 008
- CN-U- 208 799 474
- FR-A1- 2 669 381
- FR-A3- 3 004 105
- GB-A- 2 053 127

## Description

L'invention concerne un dispositif compact destiné à être positionné à proximité d'une articulation.

L'invention concerne également un système général comportant un tel dispositif compact.

### ARRIERE PLAN DE L'INVENTION

Un exosquelette d'assistance permet d'augmenter les capacités physiques d'une personne en lui facilitant la réalisation de certaines tâches. Les exosquelettes peuvent ainsi être employés dans de nombreuses applications qu'elles soient militaires, médicales, industrielles ... et dans une optique de rééducation, de palliation, d'aide ...

Il s'avère toutefois relativement complexe de réaliser un exosquelette qui puisse suivre les mouvements naturels de l'utilisateur notamment pour des articulations complexes de type cheville ou genou. L'exosquelette doit ainsi pouvoir actionner l'articulation de manière synchrone avec les mouvements de l'utilisateur pour pouvoir l'assister de manière efficace.

Afin d'essayer de remplir cette fonction, les exosquelettes actuels ont tendance à être très volumineux ce qui est peu ergonomique pour l'utilisateur et source de surcoût d'énergie pour l'utilisateur.

Le document FR 3 004 105 A3 montre un dispositif destiné à être positionné à proximité d'une cheville d'un utilisateur, le dispositif comprenant deux interfaces connectées entre elles par trois actionneurs linéaires montés en parallèle de manière que chaque actionneur soit lié par ses extrémités aux deux interfaces respectivement, l'activation des actionneurs permettant en service de bouger le pied de l'utilisateur par rapport à sa jambe.

### OBJET DE L'INVENTION

Un but de l'invention est de proposer un dispositif permettant un actionnement d'une articulation de pied d'un utilisateur de manière efficace tout en étant de dimensions relativement peu importantes Un but de l'invention est également de proposer un système général comprenant un tel dispositif.

### RESUME DE L'INVENTION

En vue de la réalisation de ce but, l'invention propose un dispositif selon la revendication destiné à être positionné à proximité d'une articulation entre deux parties, le dispositif comprenant une première interface portée par une première des deux parties et une deuxième interface portée par une deuxième des deux parties, le dispositif comprenant au moins une connexion entre la première interface et la deuxième interface.

Selon l'invention la connexion comporte deux vérins montés en parallèle de manière que chaque vérin soit lié par sa tige de sortie à la première interface et par son corps à la deuxième interface, le déplacement simultané des deux tiges de sortie permettant en service de bouger la deuxième partie de l'articulation par rapport à la première partie de l'articulation.

Ainsi, grâce à l'utilisation de deux vérins en parallèle, il est possible de développer un couple suffisamment important pour soulager un utilisateur tout en ayant un dispositif relativement compact.

L'invention autorise en conséquence de manière simple et efficace un déplacement des deux parties de l'articulation l'une par rapport à l'autre tout en étant recentrée sur l'articulation.

Selon un mode de réalisation particulier l'une des tiges de sortie est montée directement sur la deuxième interface.

Selon un mode de réalisation particulier la tige de sortie est articulée sur la deuxième interface.

Selon un mode de réalisation particulier le dispositif comporte au moins une connexion secondaire limitant un risque de coulissement non souhaité de la première interface le long de la partie associée.

Selon un mode de réalisation particulier la connexion secondaire comporte un bras fixé à au moins l'une de ses extrémités à au moins l'une des interfaces.

Selon un mode de réalisation particulier le bras est fixé à une de ses extrémités à la première interface et est articulée à sa deuxième extrémité sur la deuxième interface.

Selon un mode de réalisation particulier le dispositif comprend une canalisation d'alimentation agencée entre les deux corps des vérins assurant une mise en communication des deux chambres des vérins.

Selon un mode de réalisation particulier la canalisation est globalement conformée en U.

Selon un mode de réalisation particulier le dispositif comporte un capteur agencé dans l'espace délimité par le U de la canalisation.

Selon l'invention, le dispositif est conformé pour être positionné en service à proximité d'une cheville d'un utilisateur, la première interface étant positionnée sur une jambe de l'utilisateur et la deuxième interface sur le pied de l'utilisateur , la première interface ne dépassant pas du milieu de la jambe.

Selon un mode de réalisation particulier la deuxième interface est conformée pour être en contact avec la semelle d'une chaussure de l'utilisateur.

Selon un mode de réalisation particulier la connexion comporte uniquement deux vérins.

Selon un mode de réalisation particulier, le dispositif ne comporte qu'une seule connexion.

Selon un mode de réalisation particulier, seuls deux vérins relient les deux interfaces.

Selon un mode de réalisation particulier les vérins de la connexion ne peuvent travailler de manière indépendante. Selon un mode de réalisation particulier les vérins du dispositif ne peuvent travailler de manière indépendante.

L'invention concerne également un système général comprenant un tel dispositif ainsi qu'un bloc d'alimentation en fluide dudit dispositif.

De façon particulière le bloc d'alimentation comporte au moins un embrayage à fluide magnéto-rhéologique.

D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise à la lumière de la description qui suit en référence aux figures schématiques annexées parmi lesquelles :
La figure 1 est une vue en perspective schématique d'un système général porté par un utilisateur et comprenant au moins un dispositif selon un mode de réalisation particulier de l'invention qui est positionné à proximité d'une articulation dudit utilisateur,
La figure 2 est une vue en perspective agrandie du dispositif illustré à la figure 1, porté par l'utilisateur,
La figure 3 est une vue de côté du dispositif seul illustré à la figure 2, les vérins étant en position déployée,
La figure 4 est une vue similaire à celle de la figure 3, les vérins étant en position rétractée.

### DESCRIPTION DETAILLEE DE L'INVENTION

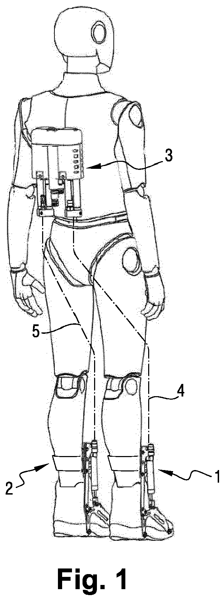

En référence à la figure 1, selon un mode de réalisation particulier de l'invention, le système général comporte un premier dispositif 1 associé à la cheville droite d'un utilisateur et un deuxième dispositif 2 associé à la cheville gauche de l'utilisateur ainsi qu'un bloc d'alimentation 3 en fluide du premier dispositif 1 et du deuxième dispositif 2. Le fluide est de préférence un liquide comme de l'huile ou de l'eau.

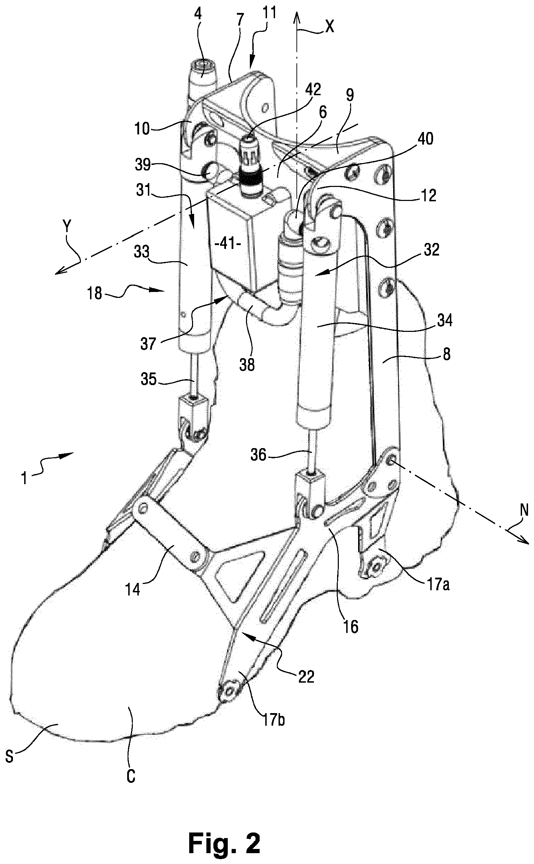

Le système comporte ainsi un premier canal 4 de raccordement du bloc d'alimentation 3 au premier dispositif 1 et un deuxième canal 5 de raccordement du bloc d'alimentation 3 au deuxième dispositif 2, les deux canaux 4, 5 étant également portés par l'utilisateur. Le bloc d'alimentation 3 est par ailleurs agencé au niveau du bas du dos de l'utilisateur par exemple par une ou des sangles, un sac-à-dos, une ceinture, un ou des élastiques Pour plus d'informations sur le bloc d'alimentation 3, on pourra de préférence se référer au bloc d'alimentation décrit dans la demande internationale PCT/CA2018/050570 déposée le 14 mai 2018 et incorporée ici par référence. Le premier dispositif 1 va être à présent décrit en référence aux figures 2 à 4. Le deuxième dispositif 2 étant ici identique au premier dispositif 1, la description qui suit est également applicable au deuxième dispositif 2.

Le dispositif 1 comporte une première interface 11 qui est agencée sur la jambe de l'utilisateur (la jambe étant ici la partie du corps humain s'étendant entre le genou et la cheville). Par exemple des sangles (non représentées ici) ou tout autre moyen d'attache permettent de solidariser la première interface 11 à la jambe. La première interface 11 est de préférence agencée à l'avant de la jambe de l'utilisateur au niveau du tibia. De la sorte la première interface 11 surplombe le pied de l'utilisateur.

La première interface 11 est agencée en partie basse de la jambe sensiblement au niveau de la cheville, le dispositif 1 étant ainsi de taille réduite. Plus précisément, la première interface 11 ne dépasse pas du milieu de la jambe et de préférence ne dépasse pas du tiers inférieur de la jambe. De préférence, la première interface 11 est conformée de sorte que les moyens d'attache (dans le cas présent des sangles) soient positionnées sous le ventre du muscle gastrocnémien. Ceci permet de limiter la compression musculaire et l'ischémie dudit muscle. On a en outre ainsi une première interface 11 de hauteur restreinte et en conséquence un dispositif 1 compact.

La première interface 11 est avantageusement conformée de manière à épouser la forme avant de la jambe. La première interface 11 comporte à cet effet une coque 6 dont la surface destinée à être en contact avec l'utilisateur est concave, de concavité similaire à celle du tibia de l'utilisateur.

La coque 6 est globalement conformée en un parallélépipède rectangle creusé au niveau de sa face principale destinée à être en contact avec l'utilisateur pour former la surface concave précitée.

Par ailleurs la première interface 1 comporte ici deux bras latéraux droit 7 et gauche 8 agencés respectivement sur la face latérale droite et la face latérale gauche de la coque 6. Typiquement, les deux bras latéraux 7, 8 sont rigidement fixés aux faces latérales droite et gauche de la coque 6. Les bras latéraux 7, 8 s'étendent ainsi depuis la face supérieure 9 de la coque (une face supérieure de chaque bras latéral 7, 8 étant ainsi à niveau de ladite face supérieure 9) jusqu'à sensiblement une deuxième interface 22 du dispositif 1. Chaque bras latéral 7, 8 est prolongé d'une patte 10, 12 s'étendant depuis l'extrémité supérieure de chaque bras en direction de l'avant du pied, les deux pattes 10, 12 dépassant ainsi de la coque 6.

Selon un mode de réalisation particulier, le dispositif 1 est agencé de sorte que les deux bras latéraux 7, 8 s'étendent selon un premier axe X sensiblement vertical. De préférence, les deux pattes 10, 12 s'étendent selon un deuxième axe Y perpendiculaire au premier axe X. Les deux pattes 10, 12 s'étendent ainsi sensiblement à l'horizontale.

Ladite deuxième interface 22 est agencée sur le pied de l'utilisateur. La deuxième interface 22 est plus précisément ici agencée sur le dessus et les côtés du pied de l'utilisateur.

La deuxième interface 22 comporte par exemple une platine 13 comprenant elle-même une portion centrale 14 s'étendant sur le dessus du pied prolongée à chacune de ses extrémités par deux extensions latérales droite 15 et gauche 16 s'étendant respectivement sur les côtés droit et gauche du pied.

De la platine 13 s'étendent quatre bras d'attache à la chaussure C de l'utilisateur. Selon un mode de réalisation particulier, deux premiers bras d'attache 17a s'étendent à partir respectivement de l'une des extrémités libres des extensions latérales droite 15 et gauche 16 jusqu'à la chaussure C et deux deuxièmes bras d'attache 17b s'étendent respectivement à partir de la jonction entre la portion centrale 14 et l'une respectives des extensions latérales 15, 16. Les premiers bras d'attache 17a s'étendent sensiblement de manière oblique vers l'arrière du pied. Les deuxièmes bras d'attache 17b s'étendent sensiblement de manière oblique vers l'avant du pied.

Les deuxièmes bras d'attache 17a sont ainsi agencés sensiblement à l'avant et sur les côtés du cou-de-pied de sorte à s'étendre de manière décalée vis-à-vis de l'axe d'articulation en flexion naturel de la cheville N de l'utilisateur. Les premiers bras d'attache 17a sont par exemple, de manière non limitative, agencés le long du pied de manière que leurs centres de rattachement à la platine 13 soient sensiblement centrés sur l'axe d'articulation en flexion naturel de la cheville N de l'utilisateur, les premiers bras d'attache 17a s'étendent ensuite en arrière vis-à-vis de cet axe d'articulation en flexion naturel de la cheville N.

Dans le cas présent, le dispositif 1 est agencé de sorte que l'axe d'articulation en flexion naturel de la cheville N soit orthogonal aux axes X et Y.

De préférence les bras d'attache 17a, 17b sont dimensionnés pour autoriser une fixation de la deuxième interface 22 à la semelle S de ladite chaussure C. Les bras d'attache 17a, 17b peuvent s'étendre de manière à être en contact avec le sol ou peuvent s'étendre jusqu'à la semelle S seulement, semelle S qui est elle-même en contact avec le sol.

De préférence les bras d'attache 17a, 17b sont répartis de façon symétrique entre les deux côtés de la chaussure C

On assure ainsi une bonne répartition des efforts exercés par la deuxième interface 22 sur la chaussure C lors d'un mouvement relatif entre les deux interfaces 11, 22.

On note que les deux interfaces 11, 22 sont ici rigides. Par ailleurs le dispositif 1 comporte une connexion principale 18 de la première interface 11 à la deuxième interface 22.

A cet effet, la connexion principale 18 comprend un ensemble de deux vérins 31, 32 montés en parallèle entre les deux interfaces 11, 22.

Chaque vérin 31, 32 s'étend ici sensiblement longitudinalement parallèlement à un même axe V. Le dispositif 1 est agencé de manière que ledit axe V soit oblique au premier axe X. Les vérins 31, 32 s'étendent ainsi de manière inclinée et non à la verticale.

Selon un mode de réalisation préféré, un premier vérin 31 est associé à un côté droit du pied et un deuxième vérin 32 est associé à un côté gauche du pied. Les deux vérins 31, 32 sont ainsi agencés de manière symétrique relativement à la cheville ce qui permet de mieux répartir les efforts exercés par le dispositif 1 sur et autour de l'utilisateur. Plus précisément ici, les deux vérins 31, 32 sont agencés légèrement en avant du cou-de-pied et légèrement sur les côtés droit et gauche du cou-de-pied.

Les vérins 31, 32 forment ainsi un couple de vérins latéraux. On note cependant que les deux vérins 31, 32 sont distincts et forment deux entités différentes.

Les vérins 31, 32 sont ici identiques.

Dans le cas présent, le corps du premier vérin 31 et le corps du deuxième vérin 32 sont liés à la première interface 11. Le corps du premier vérin 31 et le corps du deuxième vérin 32 sont directement montés sur la première interface 11 respectivement sur un côté droit et un côté gauche de la première interface 11.

Le corps du premier vérin 31 et le corps du deuxième vérin 32 sont par exemple montés articulés sur la première interface 11.

Typiquement, chaque corps des vérins 31, 32 est articulé sur la première interface 11 par une liaison rotule ou encore par une liaison pivot. Les corps des vérins 31, 32 peuvent donc pivoter vis-à-vis de la première interface 11.

Typiquement l'extrémité supérieure du corps 33 du premier vérin 31 et l'extrémité supérieure du corps 34 du deuxième vérin 32 sont chacune montée articulée au niveau de l'extrémité supérieure de la première interface 11.

Plus précisément ici, l'extrémité supérieure du corps 33 du premier vérin 31 et l'extrémité supérieure du corps 34 du deuxième vérin 32 sont chacune montée articulée respectivement sur la patte droite 10 et la patte gauche 12.

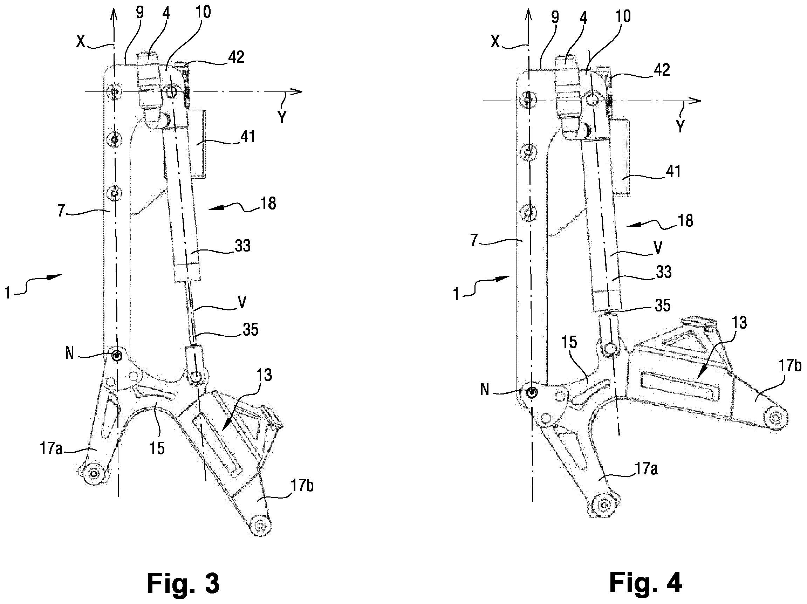

Par ailleurs, chaque tige de sortie 35, 36 des vérins 31, 32 est mobile en translation dans le corps associé 33, 34 selon un axe parallèle à l'axe V entre une position rétractée (illustrée à la figure 4) dans laquelle les tiges de sortie 35, 36 sont remontées en direction du genou de l'utilisateur et une position déployée (illustrée à la figure 3) dans laquelle les tiges de sortie 35, 36 sont abaissées en direction de la cheville de l'utilisateur.

Ainsi, les vérins 31, 32 sont des vérins de structure simple.

Le déplacement des tiges de sortie 35, 36 dans les corps 33, 34 respectifs est assuré par l'alimentation en fluide des vérins 31, 32 par le bloc d'alimentation 3.

A cet effet, le canal de raccordement 4 débouche dans un premier des deux vérins au niveau de l'extrémité supérieure du corps de vérin considéré. Le vérin dans lequel débouche le canal de raccordement 4 est de préférence le vérin extérieur i.e. le vérin gauche pour la jambe gauche et le vérin droit pour la jambe droite.

Le dispositif 1 comporte par ailleurs une canalisation d'alimentation secondaire 37 débouchant à une première extrémité dans le premier corps 33 et à une deuxième extrémité dans le deuxième corps 34. Le fluide provenant du canal de raccordement 4 peut ainsi circuler entre les deux chambres ménagées dans les deux corps 33, 34 via la canalisation d'alimentation secondaire 37 pour autoriser un déploiement ou une rétraction des deux tiges de sortie 35, 36. Ce déploiement ou cette rétraction est simultané ou quasi-simultané du fait de la faible longueur de la canalisation d'alimentation secondaire 37.

Les deux vérins 31, 32 fonctionnent ainsi en parallèle ce qui permet de développer un couple important entre les interfaces 11 et 22 tout en ayant un dispositif 1 compact, la course des vérins 31, 32 étant limitée de par la structure simple des vérins 31, 32.

La canalisation d'alimentation secondaire 37 est ici conformée en une portion centrale 38 en U prolongée à ses deux extrémités par deux tronçons 39, 40 rectilignes de raccordement. Les deux tronçons 39, 40 débouchent ici respectivement dans la partie supérieure du corps associé (respectivement 33, 34). La portion centrale 38 s'étend entre les deux tronçons 39, 40 en direction de la deuxième interface 22.

La canalisation d'alimentation secondaire 37 est par ailleurs agencée de sorte que les deux tronçons 39, 40 s'étendent sensiblement horizontalement. La canalisation d'alimentation secondaire 37 est en outre agencée de sorte que la partie centrale de la portion centrale 38 s'étende sensiblement parallèlement aux deux tronçons 39, 40 et donc sensiblement à l'horizontale. Les deux branches de la portion en U s'étendent par ailleurs ici parallèlement au premier axe X c'est-à-dire ici sensiblement à la verticale.

Selon un mode de réalisation préféré, le dispositif 1 comporte au moins un capteur 41 permettant notamment de gérer le dispositif 1 et en particulier son alimentation. Le capteur 41 est typiquement une centrale inertielle comprenant un bloc principal équipé d'un connecteur de raccordement 42. De préférence, le bloc principal est agencé dans l'espace délimité par la portion centrale 38 de la canalisation d'alimentation secondaire 37. Le bloc principal est ainsi agencé au niveau des corps des deux vérins 31, 32. Le connecteur de raccordement 42 s'étend quant à lui depuis une face supérieure du bloc principal de sorte à s'étendre le long de la coque 6.

On a ainsi un dispositif 1 particulièrement compact.

Par ailleurs, la tige de sortie 35, 36 de chaque vérin 31, 32 est directement montée à son extrémité libre sur la deuxième interface 22 respectivement sur un côté droit et un côté gauche de la deuxième interface 22. Ceci permet d'actionner directement la deuxième interface 22 par les tiges de sortie 35, 36 sans mécanisme d'actionnement intermédiaire.

De préférence également, l'extrémité libre des tiges de sortie 35, 36 est articulée sur la deuxième interface 22. On limite ainsi un risque d'abîmer les extrémités libres des tiges de sortie 35, 36 lorsqu'elles appuient sur la deuxième interface 22. En outre, ceci permet au dispositif 1 de suivre plus naturellement les mouvements de la cheville de l'utilisateur.

Typiquement, les tiges de sortie 35, 36 sont articulées sur la deuxième interface 22 par exemple par une liaison rotule ou encore par une liaison pivot.

Les extrémités libres des tiges de sortie 35, 36 sont typiquement conformés en chape pour être montées pivotantes sur la platine 13. Les chapes entourent chacune respectivement la portion de platine 13 associée. Les tiges de sortie 35, 36 sont ici montées sur la deuxième interface 22 au niveau de la jonction entre la portion centrale 14 et les extensions latérales 15, 16 de la platine 13, sensiblement au-dessus des deuxièmes bras 17.

Les tiges de sortie 35, 36 agissent en conséquence sur la deuxième interface 22 de manière décalée vis-à-vis de l'axe d'articulation en flexion naturel de la cheville N de l'utilisateur. En particulier les tiges de sortie 35, 36 agissent via la platine 13 sur les bras d'attache 17a, 17b qui agissent eux-mêmes sur le sol ou sur la semelle S.

En service, partant d'une situation dans laquelle les vérins 31, 32 sont en position rétractée (représentée à la figure 4), lorsque le bloc d'alimentation 3 alimente en fluide les deux vérins 31, 32, ceci va provoquer le déplacement progressif des deux vérins 31, 32 jusqu'à ce qu'ils se trouvent en position déployée (représentée à la figure 3).

Les tiges de sortie 35, 36 exercent en conséquence progressivement un effort de poussée sur la deuxième interface 22 provoquant une rotation de la deuxième interface 22 vis-à-vis de la première interface 11 et donc une rotation de la cheville.

Le dispositif 1 permet ainsi d'aider l'utilisateur dans ses déplacements, que ce soit pour la marche ou la course et ce pour des applications civiles comme militaires.

Le dispositif 1 ainsi décrit s'avère relativement simple de construction et autorise une action directe sur la deuxième interface 22 via les tiges de sortie 35, 36.

Ceci permet d'avoir un dispositif 1 efficace car très réactif. En particulier le dispositif 1 décrit s'affranchit de mécanismes de type poulies-courroies qui pourraient être trop élastiques.

Le dispositif 1 s'avère par ailleurs robuste.

En outre, le dispositif 1 est particulièrement compact en restant centré autour de la cheville. Ceci permet également de pouvoir faire porter le dispositif 1 à un grand nombre de personnes, relativement à un dispositif de l'art antérieur remontant haut sur le tibia pour lequel on rencontre alors des problèmes de longueur de tibia ou de dimensions du mollet différents pour chaque utilisateur.

Par ailleurs, le recours à deux vérins 31, 32 agencés de manière symétrique chaque côté de la cheville permet de pouvoir mieux gérer les efforts exercés sur l'utilisateur en particulier en termes de torsion. On améliore ainsi la stabilité du dispositif 1.

De façon particulière, le dispositif 1 est agencé de manière que lorsque les vérins 31, 32 sont dans une position médiane entre la position déployée et la position rétractée, le pied de l'utilisateur est sensiblement dans un plan horizontal, ce qui lui permet de naviguer en flexion et extension autour de ce plan lors de ses déplacements.

Selon un mode de réalisation privilégié, afin d'éviter que la première interface 11 ne remonte le long du tibia par réaction lorsque les tiges de sortie 35, 36 exercent une poussée sur la deuxième interface 22, le dispositif 1 comporte au moins une connexion secondaire agencée ici entre la première interface 11 et la deuxième interface 22 de l'utilisateur.

De préférence, le dispositif 1 comporte deux connexions secondaires qui sont chacune agencées entre la première interface 11 et la deuxième interface 22. Chaque connexion secondaire est typiquement agencée sur respectivement l'un des côtés droit et gauche de la première interface 11 et à l'extérieur de la première interface 11.

Les connexions secondaires sont ici formées par les deux bras 7, 8 de la première interface 11. Comme déjà indiqué les bras 7, 8 sont rigidement fixés à une première extrémité à la première interface 11 et sont ici montés sur la deuxième interface 22.

Les bras 7, 8 forment ainsi des structures rigides permettant de reprendre les efforts générés par la connexion principale 18 et ainsi d'éviter des déplacements parasites de la première interface 11, et notamment une remontée de la première interface 11 le long du tibia de l'utilisateur.

Les bras 7, 8 sont articulés à leur deuxième extrémité sur la deuxième interface 22.

Par exemple, chaque bras 7, 8 est agencé de manière à être relié à une respective des extrémités libres des extensions latérales 15, 16 de la platine 13.

Chaque bras 7, 8 est par ailleurs de préférence agencé de manière à être monté par une liaison pivot sur la deuxième interface 22 sensiblement au niveau de l'axe d'articulation en flexion naturel de la cheville N.

On minimise ainsi les déplacements parasites de la première interface 11 relativement à l'utilisateur comme notamment le glissement de l'interface 11 le long du tibia de l'utilisateur.

Bien entendu l'invention n'est pas limitée au mode de réalisation décrit et on peut y apporter des variantes sans sortir du cadre de l'invention tel que défini par les revendications.

Typiquement, bien qu'ici le dispositif soit associé à un système général, le dispositif pourra être autonome. Le dispositif pourra ainsi comporter son propre bloc d'alimentation qui pourra être à proximité d'une ou des deux interfaces, porté par l'une ou les deux interfaces ou agencé de manière déportée vis-à-vis des deux interfaces.

Par ailleurs, bien qu'ici le dispositif ait été associé à une cheville, le dispositif pourra être associé à d'autres articulations comme par exemple un genou, un poignet ...

Le dispositif pourra être utilisé dans de nombreuses applications et être ou faire partie par exemple d'un exosquelette, d'une orthèse, d'une prothèse, d'un système portable, d'un système intégré à un robot ...

De la même manière, bien qu'ici le dispositif soit porté par un humain, le dispositif pourra être porté par un robot.

L'une ou les deux interfaces d'un dispositif pourront être directement intégrées aux vêtements ou aux chaussures d'un utilisateur au lieu d'être rapportées sur eux comme ceci a été décrit. Par exemple la deuxième interface pourra être partie intégrante de la chaussure de l'utilisateur.

L'un ou les deux corps de vérins pourront être rigidement fixés à la première interface et non articulée sur elle. L'un ou les deux corps de vérins pourront être rigidement fixés à la deuxième interface et non articulés sur elle. L'une ou les deux tiges pourront ne pas être directement reliés à la deuxième interface.

Le dispositif pourra être agencé autrement. Par exemple le dispositif pourra être agencé de sorte que les vérins s'étendent à la verticale.

Le dispositif pourra comporter un nombre différent de connexions entre les deux interfaces. Le dispositif pourra ainsi ne comporter qu'une seule connexion.

Si le dispositif comporte des connexions secondaires celles-ci pourront être différentes de ce qui a été indiqué.

Par exemple en place des bras on pourra avoir des barrettes rectilignes ou bien encore des biellettes articulées à l'une ou à leurs deux extrémités par exemple par des liaisons pivots ou bien encore des liaisons rotules. On conférera ainsi une meilleure souplesse au dispositif. Les biellettes pourront par exemple être articulées à leur première extrémité à la première interface et à leur deuxième extrémité à la chaussure. Par exemple, dans le cas d'un couple de biellettes, chaque biellette pourra être agencée de manière à être articulée sur une respective des extrémités latérales de la première interface et à être articulée sur un des côtés latéraux externes correspondant de la chaussure. Chaque biellette pourra par ailleurs être agencée de manière à être articulée sur la chaussure sensiblement au niveau de l'axe d'articulation en flexion de la cheville. Les différentes biellettes formeront alors des structures rigides permettant de reprendre les efforts générés par la connexion principale et ainsi d'éviter des déplacements parasites de la première interface, et notamment une remontée de la première interface le long du tibia de l'utilisateur.

Dans tous les cas, la ou les connexions secondaires pourront être articulées ou fixées à leur deuxième extrémité à la semelle de la chaussure ou au corps de la chaussure plutôt qu'à la deuxième interface comme cela a été illustré. Une connexion secondaire sera de préférence liée à au moins l'une de ses extrémités à au moins l'une des interfaces.

La connexion secondaire pourra comporter un vérin en place d'une structure rigide comme une barrette ou une biellette ou bien encore des sangles ou des organes de rappel de type ressort ou élastiques.

Les connexions secondaires pourront être portées par la première interface et/ou la deuxième interface et/ou un vêtement ou une chaussure de l'utilisateur. Une connexion secondaire pourra ainsi être directement portée à chacune de ses extrémités par l'une des deux interfaces respectives comme ce qui a été illustré ici.

Le vérin ou les vérins pourront retourner à leur position rétractée naturellement (lorsque le pied vient reposer complètement sur le sol) et/ou de manière contrôlée par aspiration du fluide hors du vérin et/ou par l'intermédiaire d'un organe de rappel comme un ressort ... Le bloc d'alimentation pourra éventuellement produire un couple pour compenser un effort qui serait produit par un organe de rappel.

Le dispositif pourra comporter d'autres éléments que ce qui a été indiqué comme par exemple un ou plusieurs capteurs pour mesurer l'effort exercé par le pied de l'utilisateur sur le sol ou l'effort exercé par la deuxième interface sur la chaussure ou l'effort exercé au niveau de la zone d'appui de la tige de sortie sur la deuxième interface ... le ou les capteurs pourront mesurer d'autres paramètres comme une température, une pression, une accélération, une position ...

Les interfaces pourront prendre une autre forme que celles décrites. Par exemple chaque interface pourra prendre la forme d'un manchon. D'autres moyens que des sangles pourront être utilisés pour attacher les interfaces à l'utilisateur comme des élastiques, des bandes d'attache de type crochet/boucle (comme le produit commercialisé sous la marque Velcro) ...

De même la canalisation pourra avoir une autre forme que celle décrite est par exemple s'étendre simplement rectilignement entre les deux vérins. Le dispositif pourra ne pas comporter de canalisation entre les deux vérins, chaque vérin étant par exemple raccordé individuellement au bloc d'alimentation.

De même le bloc d'alimentation associé au dispositif pourra être différent de ce qui a été indiqué. Par exemple le bloc d'alimentation pourra ne pas comporter d'embrayage entre le moteur et l'actionneur principal ou alors un embrayage différent par exemple qui n'est pas à fluide magnéto-rhéologique. Le bloc d'alimentation pourra également ne pas comporter d'actionneur de sortie le moteur et/ou l'embrayage alimentant directement le dispositif. Le bloc d'alimentation pourra également comporter un ou des réducteurs de vitesse. Le nombre d'éléments au sein du bloc d'alimentation pourra ainsi varier. On pourra par exemple associer un moteur différent à chaque dispositif ou bien encore associer un même embrayage à plusieurs dispositifs.

Tout ou partie du bloc d'alimentation pourra être portée ou faire partie du dispositif.

Le système pourra comporter un nombre différent de dispositif que ce qui a été décrit et par exemple un seul dispositif.

## Revendications

1. Dispositif destiné à être positionné à proximité d'une articulation entre deux parties, le dispositif comprenant une première interface (11) portée par une première des deux parties et une deuxième interface (22) portée par une deuxième des deux parties, le dispositif comprenant au moins une connexion entre la première interface et la deuxième interface, **caractérisé en ce que** la connexion comporte deux vérins (31, 32) montés en parallèle de manière que chaque vérin soit lié par sa tige de sortie à la première interface et par son corps à la deuxième interface, le déplacement simultané des deux tiges de sortie (35, 36) permettant en service de bouger la deuxième partie de l'articulation par rapport à la première partie de l'articulation,
le dispositif étant conformé pour être positionné en service à proximité d'une cheville d'un utilisateur, la première interface (11) étant positionnée sur une jambe de l'utilisateur et la deuxième interface (22) sur le pied de l'utilisateur, la première interface ne dépassant pas du milieu de la jambe.

2. Dispositif selon la revendication 1, dans lequel au moins l'une des tiges de sortie (35, 36) est montée directement sur la deuxième interface (22).

3. Dispositif selon la revendication 2, dans lequel la tige de sortie (35, 36) est articulée sur la deuxième interface (22).

4. Dispositif selon l'une des revendications précédentes, comportant au moins une connexion secondaire limitant un risque de coulissement non souhaité de la première interface (11) le long de la partie associée.

5. Dispositif selon la revendication 4, dans lequel la connexion secondaire comporte un bras (7, 8) fixé à au moins l'une de ses extrémités à au moins l'une des interfaces.

6. Dispositif selon la revendication 5, dans lequel le bras (7, 8) est fixé à une de ses extrémités à la première interface (11) et est articulée à sa deuxième extrémité sur la deuxième interface (22).

7. Dispositif selon l'une des revendications précédentes comprenant une canalisation (37) d'alimentation agencée entre les deux corps des vérins (31, 32) assurant une mise en communication des deux chambres des vérins.

8. Dispositif selon la revendication 7, dans lequel la canalisation (37) est globalement conformée en U.

9. Dispositif selon la revendication 8, comprenant au moins un capteur (41) agencé dans l'espace délimité par le U de la canalisation (37).

10. Dispositif selon la revendication 1, dans lequel la deuxième interface (22) est conformée pour être en contact avec la semelle d'une chaussure de l'utilisateur.

11. Système , comportant un dispositif selon l'une des revendications précédentes et un bloc d'alimentation (3) en fluide dudit dispositif.

12. Système selon la revendication 11, dans lequel le bloc d'alimentation comporte au moins un embrayage à fluide magnéto-rhéologique.

## Patentansprüche

1. Vorrichtung, die dazu bestimmt ist, in der Nähe eines Gelenks zwischen zwei Teilen positioniert zu sein, wobei die Vorrichtung eine erste Schnittstelle (11), die von einem ersten der beiden Teile getragen wird, und eine zweite Schnittstelle (22) umfasst, die von einem zweiten der beiden Teile getragen wird, wobei die Vorrichtung mindestens eine Verbindung zwischen der ersten Schnittstelle und der zweiten Schnittstelle umfasst, **dadurch gekennzeichnet, dass** die Verbindung zwei Zylinder (31, 32) umfasst, die parallel derart angebracht sind, dass jeder Zylinder über seine Austrittsstange mit der ersten Schnittstelle und über sein Gehäuse mit der zweiten Schnittstelle verbunden ist, wobei die simultane Verschiebung der beiden Austrittsstangen (35, 36) im Gebrauch eine Bewegung des zweiten Teils des Gelenks in Bezug auf den ersten Teil des Gelenks ermöglicht,
wobei die Vorrichtung so ausgebildet ist, dass sie im Gebrauch in der Nähe eines Knöchels eines Benutzers positioniert ist, wobei die erste Schnittstelle (11) an einem Bein des Benutzers und die zweite Schnittstelle (22) an dem Fuß des Benutzers positioniert ist, wobei die erste Schnittstelle nicht über die Mitte des Beins hinausgeht.

2. Vorrichtung nach Anspruch 1, bei dem mindestens eine der Austrittsstangen (35, 36) direkt an der zweiten Schnittstelle (22) angebracht ist.

3. Vorrichtung nach Anspruch 2, bei der die Austrittsstange (35, 36) an der zweiten Schnittstelle (22) angelenkt ist.

4. Vorrichtung nach einem der vorhergehenden Ansprüche, umfassend mindestens eine sekundäre Verbindung, die ein Risiko eines unerwünschten Gleitens der ersten Schnittstelle (11) entlang des dazugehörigen Teils begrenzt.

5. Vorrichtung nach Anspruch 4, bei der die sekundäre Verbindung einen Arm (7, 8) umfasst, der an mindestens einem seiner Enden an mindestens einer der Schnittstellen fixiert ist.

6. Vorrichtung nach Anspruch 5, bei der der Arm (7, 8) an einem seiner Enden an der ersten Schnittstelle (11) fixiert und an seinem zweiten Ende an der zweiten Schnittstelle (22) angelenkt ist.

7. Vorrichtung nach einem der vorhergehenden Ansprüche, umfassend eine Versorgungsleitung (37), die zwischen den beiden Gehäusen der Zylinder (31, 32) ausgebildet ist und ein In-Verbindung-Setzen der beiden Kammern der Zylinder sicherstellt.

8. Vorrichtung nach Anspruch 7, bei der die Leitung (37) insgesamt zu einem U geformt ist.

9. Vorrichtung nach Anspruch 8, umfassend mindestens einen Sensor (41), der in dem durch das U der Leitung (37) begrenzten Raum angeordnet ist.

10. Vorrichtung nach Anspruch 1, bei der die zweite Schnittstelle (22) so ausgebildet ist, dass sie mit der Sohle eines Schuhs des Benutzers in Kontakt ist.

11. System, umfassend eine Vorrichtung nach einem der vorhergehenden Ansprüche und einen Fluidversorgungsblock (3) zur Versorgung der Vorrichtung mit Fluid.

12. System nach Anspruch 11, bei dem der Versorgungsblock mindestens eine Kupplung mit magnetorheologischer Flüssigkeit umfasst.

## Claims

1. A device intended to be positioned close to a joint between two parts, the device comprising a first interface (11) carried by a first of the two parts and a second interface (22) carried by a second of the two parts, the device comprising at least one connection between the first interface and the second interface, **characterised in that** the connection comprises two cylinders (31, 32) mounted in parallel so that each cylinder is connected by its output rod to the first interface and by its body to the second interface, the simultaneous displacement of the two output rods (35, 36) allowing, when in use, movement of the second part of the joint relative to the first part of the joint, the device being shaped to be positioned in use in the vicinity of a user's ankle, the first interface (11) being positioned on a user's leg and the second interface (22) on the user's foot, the first interface 11 not extending beyond the middle of the leg.

2. A device according to claim 1, wherein at least one of the output rods (35, 36) is mounted directly on the second interface (22).

3. A device according to claim 2, wherein the output rod (35, 36) is articulated onto the second interface (22).

4. A device according to any of the preceding claims, comprising at least one secondary connection limiting a risk of unwanted sliding of the first interface (11) along the associated part.

5. A device according to claim 4, wherein the secondary connection comprises an arm (7, 8) attached at at least one of its ends to at least one of the interfaces.

6. A device according to claim 5, wherein the arm (7, 8) is attached at one of its ends to the first interface (11) and is articulated, at its second end, onto the second interface (22).

7. A device according to one of the preceding claims comprising a supply-line (37) arranged between the two bodies of the cylinders (31, 32) ensuring communication between the two chambers of the cylinders.

8. A device according to claim 7, wherein the supply-line(37) is generally U-shaped.

9. A device according to claim 8, comprising at least one sensor (41) arranged in the space delimited by the U of the supply-line (37).

10. A device according to claim1, wherein the second interface (22) is shaped to be in contact with the sole of a user's shoe.

11. A system comprising a device according to any of the preceding claims and a fluid-supply unit (3) for said device.

12. A system according to claim 11, wherein the supply unit comprises at least one magneto-rheological fluid clutch.
